Europäisches Patentamt

European Patent Office

Office européen des brevets

(11) Veröffentlichungsnummer: **0 160 933**
**B1**

(12) **EUROPÄISCHE PATENTSCHRIFT**

(45) Veröffentlichungstag der Patentschrift: **27.12.90**

(51) Int. Cl.⁵: **A 01 J 5/04**

(21) Anmeldenummer: **85105343.9**

(22) Anmeldetag: **02.05.85**

(54) Melkvorrichtung mit einem Sammelstück.

(30) Priorität: **09.05.84 DE 3429428**

(43) Veröffentlichungstag der Anmeldung:
**13.11.85 Patentblatt 85/46**

(45) Bekanntmachung des Hinweises auf die
Patenterteilung:
**27.12.90 Patentblatt 90/52**

(84) Benannte Vertragsstaaten:
**AT BE CH FR GB IT LI LU NL**

(56) Entgegenhaltungen:
**WO-A-81/03412**
**WO-A-84/00665**
**AU-A-5 281 269**
**FR-A-1 401 097**

**Sonderdruck "top agrar extra" über
"Melktechnik 79", Münster-Hiltrup, DE. Seiten
40-44; H. Worstorff: "Neue Entwicklungen unter
die Lupe genommen".**

(73) Patentinhaber: **Miele & Cie. GmbH & Co.
Carl-Miele-Strasse
D-4830 Gütersloh 1 (DE)**

(72) Erfinder: **Wilmering, Hans
Im Jägerfeld 15
D-3167 Burgdorf (DE)**

Courier Press, Leamington Spa, England.

**Beschreibung**

Die Erfindung betrifft eine Melkvorrichtung mit einem aus Zitzenbechern und einem Sammelstück bestehenden Melkzeug, nach dem Oberbegriff des Anspruchs 1.

Bei hochverlegten Melkleitungen entsteht bei konventionellen Melkanlagen durch den hydrostatischen Druckverlust eine Vakuumabsenkung unterhalb der Kuhzitzen in den Zitzenbechern. Dieser hydrostatische Druckverlust kann in der Größenordnung bis zu 20 kPa betragen und dadurch entsteht die sogenannte zyklische Schwankung durch den Vakuumabfall (Vakuumverlust). Dieser Vakuumverlust wird dadurch hervorgerufen, daß die Milch nicht nur durch das Vakuum vom Euter entzogen wird, sondern auch vom Milchsammelstück bis zur hochverlegten Leitung transportiert werden muß. Neben dem hydrostatischen Druckverlust entstehen beim Transport außerdem noch Vakuumverluste durch Reibung im Milchschlauch. Diese Vakuumschwankung an der Zitze wird vom Fachmann als zyklische Schwankung bezeichnet. Verschiedene Faktoren spielen hier außerdem noch eine Rolle, so unterschiedliche Pulsierung oder unterschiedlicher Milchtransport. Bei großem Milchfluß kann der Vakuumverlust so groß werden, daß das Melkzeug sich nicht mehr am Euter halten kann und abfällt.

Die Probleme des Vakuumverlustes bzw. der zyklischen Schwankung liegen jedoch nicht nur allein in der Leitungshöhe, sondern werden von dem gesamten Konstruktionsprinzip der Melkeinheit beeinflußt.

Eine Melkeinheit soll einen möglichst geringen Vakuumverlust ausweisen. Ist das der Fall, kann man mit dem Nennvakuum unterhalb der Zitzen heruntergehen, so daß mit dieser Ausführung dann schonender gemolken werden kann. Die Förderhöhe und die Querschnitte des Transportschlauches sind ein entscheidender Faktor für den hydrostatischen Druckverlust. Als Folge des hydrostatischen Druckverlustes tritt eine unterschiedliche Senkung des Vakuums am Euter gegenüber dem Vakuum in der Melkleitung auf.

Die Höhe der Vakuumschwankungen ist abhängig vom Milchfluß. Der Abfall des Vakuums ist am kleinsten bei niedrigem Milchfluß und am größten beim höchsten Minutengemelk. Es wäre wünschenswert, wenn bei geringem Milchfluß ein kleineres und bei hohem Milchfluß ein höheres Vakuum in der Melkleitung wäre, das würde den idealen Melkbedingungen gerecht werden. Der hydrostatische Druckverlust senkt also das Betriebsvakuum am Euter. Allgemein ist es üblich, mit dem Melk-Unterdruck auch die Milch zu transportieren. Deshalb sinkt insbesondere bei hochverlegten Melkleitungen auch das Melkvakuum an der Zitze erheblich ab.

Um diese negativen Erscheinungen einer Rohrmelkanlage zu vermeiden, sind Melkanlagen bekannt, die z.B. mit einem höheren Transportvakuum die Milch vom Sammelstück in die Melkleitung transportieren und die mit einem zweiten Melkvakuum und einem separaten Rohrsystem die Vakuumkonstanz im Sammelstück und damit unter der Zitzenspitze konstant halten sollen.

Nach diesem Melksystem wird z.B. bei einer bekannten Anlage ein Unterdruck von 47 kPa als Nennvakuum verwendet (sh. Sonderdruck "top agrar extra" über "Melktechnik 79", Münster-Hiltrup, DE, Seiten 40—44; H. Worstorff: "Nene Entwicklungen unter die Lupe genommen".

Im Milchschlauch und in der Melkleitung ist dagegen ein auf 64 kPa erhöhtes Transportvakuum vorhanden. Diese Einrichtung beinhaltet ein kompliziertes Membranstabilationsprinzip, das auch nur bei geringem Milchfluß in etwa konstante Vakuumbedingungen (Vakuumaplikation) gibt. Bei hohem Milchfluß (mehr als 2 l/min), sinkt das Betriebsvakuum am Euter jedoch stark ab.

Weiterhin ist aus der vorgenannten Druckschrift ein System bekannt, bei dem in einer sogenannten Trennkammer zwischen dem Sammelstück und der Melkleitung Milch und Luft getrennt werden, so daß im Sammelstück ein annähernd konstantes Vakuum zur Verfügung steht.

Diese Einrichtung ist jedoch aufgrund der Ventile und Steuereinrichtungen recht kompliziert und unhandlich, außerdem werden für dieses System zwei unterschiedliche Vakua (47 kPa für das Melkvakuum und 64 kPa für das Transportvakuum) benötigt. Die Unterdruck-Differenz zwischen dem Transportvakuum und dem Melkvakuum ist für die Absaugung der Milch notwendig.

Bei einem anderen System wird mittels periodischem Lufteinlaß in den Zitzenbecher die Milch nach dem Melken aus der Zitze durch den Einlaß von atmosphärischer Luft im Transport beschleunigt. Aber auch bei diesem System mit periodischem Lufteinlaß ist das Melkvakuum unterhalb der Zitze nicht konstant, bei höherem Minutengemelk gibt es ebenfalls einen ungünstigen Vakuumverlauf im Melkzeug, da auch hier der Milchtransport vom Sammelstück zur Milchtransportleitung und die Versorgung des Sammelstückes mit Melkvakuum über den gleichen Schlauch erfolgt.

Es ist außerdem in der zitierten Literatur "top agrar extra" ein System bekannt, bei dem die Trennung von Milch und Luft im Sammelstück direkt an der Kuh erfolgt. Dadurch soll ein vom Milchfluß unabhängiges konstantes Vakuum am Euter erreicht werden. In diesem Sammelstück befindet sich ein Schwimmer, der den Milchtransportweg dann freigibt, wenn eine ausreichende Milchmenge im Milchsammelstück ermolken ist. Dieses System arbeitet jedoch auch mit zwei unterschiedlichen Vakua, einmal für die Versorgung des Vakuums zum Melken und einem mit höherem Vakuum für den Milchtransport im Milchschlauch und in der Melkleitung. Aufgrund der Konstruktion ist das Sammelstück groß und unhandlich, was zu erheblichen Schwierigkeiten beim Melken von Tieren mit tiefen Eutern führt.

Bei einer Melkvorrichtung der gattungsgemäßen Art nach der AU—A—52 812 69 ist es bekannt, das mit den Zitzenbechern über die kurzen Milchschläuche verbundene Milchsammelstück in einem die ermolkene Milch aufnehmenden ersten Innenraum und in einen mit den kurzen Pulsschläuchen der Zitzenbecher sowie mit dem Melkpulsator verbundenen zweiten Innenraum zu unterteilen. Der zweite Innenraum ist dabei mit wechselndem Vakuum (Vakuum/atmosphärische Außenluft) beaufschlagt. Während der Saugphase wird der zweite Innenraum über den langen Pulsschlauch des Melkpulsators an eine Vakuumquelle gelegt. Hingegen erfolgt in der Entlastungsphase die Zugabe von Außenluft in den Innenraum. Für die Erzeugung des Vakuums ist der Melkpulsator mit einer Vakuumpumpe verbunden. Ebenfalls wird in der Entlastungsphase dem ersten Innenraum gesteuert Außenluft über ein Zweiwegeventil zugeführt, welche Luft als Transportluft für die im Sammelstück befindliche ermolkene Milch herangezogen wird. Die Transportluft sorgt einerseits für die Ableitung der Milch aus dem Sammelstück und andererseits für den Transport der Milch durch den langen Milchschlauch bis zur hoch verlegten Milchtransportleitung. Diese Milchtransportleitung ist in aller Regel mit Vakuum beaufschlagt. Zum gesteuerten Schalten des Zweiwegeventils besitzt das Milchsammelstück ferner einen mit konstantem Vakuum beaufschlagten Raum, mit dem der ersten Innenraum des Sammelstücks nur in der Saugphase in Verbindung tritt.

Abgesehen davon, daß sich bei dem bekannten Technikstand verschiedene Vakuumhöhen—wie Konstantvakuum im Ventilraum des Sammelstücks, Transportvakuum in der Milchtransportleitung und das Pulsvakuum für die Zitzenbecheraußenräume des von einer separaten Vakuumpumpe über den Melkpulsator bereitgestellten Unterdrucks—zwangsläufig einstellen, deren gegenseitige Anpassung und Abstimmung nur über teure und komplizierte Regeleinrichtungen möglich ist, kann nicht verhindert werden, daß die Zuführung der Außenluft für den Abtransport der Milch aus dem Sammelstück unkontrolliert erfolgt. Dies ist in der Tatsache begründet, daß die Transportluft direkt über Belüftungsbohrungen im Sammelstück von außen angesaugt wird, wenn das Zweiwegeventil im Entlastungstakt schaltet. Da diese Belüftungsbohrungen jedoch unmittelbar mit der Stalluft in Berührung stehen, kann es zu einem Verschluß- oder Teilverschluß dieser Luftöffnungen kommen, wodurch der Milchtransport unregelmäßig abläuft oder gar stoppt. Ein weiterer gravierender Nachteil ist darin zu sehen, daß mit dem Einströmen von atmosphärischer Luft in das Sammelstück ein Zurückspritzen (Rückspray) der ermolkenen Milch durch die Zitzenspitzen erfolgt, wodurch Eutererkrankungen begünstigt werden. Ferner wird der Milchabtransport aus dem Sammelstück ohne Rückschlagklappen ungünstig beeinflußt.

Aus der WO—A—81 03412 ist eine Melkvorrichtung mit einem Milchsammelstück bekannt, bei der zum Zwecke der Zitzenschonung und zur Vermeidung eines Milchrückflusses in den kurzen Milchschläuchlen eine Rückschlagventilanordnung im Mündungsbereich der kurzen Milchschläuche in das Sammelstück vorgesehen ist. Bei diesem Technikstand erfolgt jedoch der Milchtransport aus dem Sammelstück nicht durch ausschließlich in der Entlastungs in den Milchsammelraum eingesteuerte atmosphärische Außenluft. Als Transporthilfe für die Milch in die Milchtransportleitung ist das Sammelstück mit einer ständig geöffneten kleinen Luftdüse versehen, deren Querschnitt jedoch auf das System abgestimmt werden muß. Auch bei dieser kleinen Bohrung besteht die Gefahr einer Verstopfung mit dem Nachteil eines unregelmäßigen Milchtransportes und Änderung der Vakuumverhältnisse im Melkzeug.

Der Erfindung liegt die Aufgabe zugrunde, eine Melkvorrichtung der eingangs genannten Art so auszubilden, daß zyklische Vakuumschwankungen im Sammelstück und damit auch an den Zitzen der Kuh—insbesondere bei hochverlegten Rohrleitungen—sicher vermieden werden. Außerdem soll die Vorrichtung preiswert herzustellen und möglichst einfach ausgebildet sein sowie störunanfällig mit geringem Montageufwand arbeiten.

Die Lösung dieser Aufgabe wird durch den Gegenstand nach dem neuen Anspruch 1 erreicht.

Weitere vorteilhafte Ausführungen der Erfindung sind aus den Unteransprüchen ersichtlich.

Ein Ausführungsbeispiel der Erfindung ist in den Zeichnungen schematisch dargestellt.
Es zeigen:
Fig. 1 eine Melkvorrichtung mit einem Melkzeug in der Saugphase,
Fig. 2 die Melkvorrichtung nach Fig. 1 in der Entlastungsphase,
Fig. 3 das Sammelstück, teilweise im Schnitt.

Das Melkzeug 1 besteht aus den Zitzenbechern 2 und dem Sammelstück 3. Das Sammelstück 3 ist über den langen Milchschlauch 4 mit der Milchtransportleitung 5 verbunden.

Außerdem ist das Sammelstück 3 zusätzlich mit einem Verbindungsschlauch 6 mit der Milchtransportleitung 5, mit der Luftleitung 7 oder mit der Spülleitung 8 verbunden. Der Verbindungsschlauch 6 ist über ein Ventil mit dem Inneren des Sammelstücks 3 verbunden, das vorzugsweise als Zweiwege-Membranventil 9 ausgebildet ist. Dieses Zweiwege-Membranventil 9 wird von dem Melkpulsator 10 gesteuert.

Die Zitzenbecher 2 sind mit dem Sammelstück 3 über die kurzen Milchschläuche 11 und über die kurzen Pulsschläuche 12 verbunden. An den Einmündungen der kurzen Milchschläuche 11 in das Sammelstück 3 ist jeweils ein Rückschlagventil 13 im Sammelstück 3 angeordnet. In der Saugphase steuert der Melkpulsator 10 über den langen Pulsschlauch 14 das Zweiwege-Membranventil 9 in dem Oberteil des Sammelstücks 3 auf Vakuumdurchgang. Dadurch wird das Sammelstück 3 mit Vakuum versorgt. Da mit dem Verbindungsschlauch 6 keine Milch transportiert werden muß, wird der volle Unterdruck über den Verbindungsschlauch 6 in das Sammelstück 3 geleitet und über die kurzen Milschschläuche 11 voll im Zitzenbecher 2 wirksam. Da der Verbindungsschlauch 6 immer milchfrei bleibt, ist die Höhe des Unterdrucks im Sammelstück 3 völlig unabhängig von der Milchmenge im langen Milchschlauch 4.

Im Entlastungstakt schaltet der Melkpulsator 10 das Zweiwege-Membranventil 9 in die Belüftungsstellung. Dadurch kann über die Verbindungsleitung 15, den langen Pulsschlauch 14 und den Melkpulsator 10 atmosphärische Luft in das Innere des Sammelstücks 3 eindringen. Dabei schließen sich die Rückschlagventile 13 und ein Haftvakuum bleibt in den kurzen Milchschläuchen 11 erhalten, so daß die Zitzenbecher 2 sicher an den Zitzen hängen bleiben und auch die für die Entlastungsphase notwendige Duckdifferenz in den nicht gezeichneten Innen- und Außenräumen der Zitzenbecher 2 erhalten bleibt.

Gleichzeitig wird die Milch von der einströmenden atmosphärischen Luft aus dem Inneren des Sammelstücks 3 durch den langen Milchschlauch 4 in die Milchtransportleitung 5 gedrückt. Praktisch die gesamte Milchmenge aus dem Sammelstück 3 wird wie ein geschlossener Flüssigkeitspfropfen durch den langen Milchschlauch 4 in die Milchtransportleitung 5 gedrückt. Da hinter der zur Milchtransportleitung 5 abströmenden Milch atmosphärische Luft nachströmt, kann sich hinter dem abströmenden Milchpropfen auch kein sogenanntes Zusatzvakuum aufbauen, so daß es auch nicht zu einem Zurückströmen des Milchpropfens kommen kann. In dem langen Milchschlauch 4 kann eine zusätzliche Rückschlagklappe 16 eingebaut sein. Diese zusätzliche Rückschlagklappe 16 verhindert auch bei sehr großen Steighöhen sicher ein Zurückströmen der Milch in dem langen Milchschlauch 4. Da dieses Pendeln der Milch im Milchschlauch 4 nicht mehr auftritt, kann eine Erhöhung der freien Fettsäure nicht mehr auftreten. Dadurch wird die Qualität der Milch verbessert.

Der Verbindungsschlauch 6 kann wahlweise entweder mit der Milchstransportleitung 5, der Luftleitung 7 oder—falls vorhanden—mit der Spülleitung 8 verbunden sein. Wenn in den Milchstransportleitungen 5 Steigungen über Türdurchbrüchen oder dergleichen vorhanden sind, ist es nicht sinnvoll, den Verbindungsschlauch 6 mit der Milchtransportleitung 5 zu verbinden. In diesem Fall werden bessere Melkergebnisse erzielt, wenn der Verbindungsschlauch 6 an die Luftleitung 7 oder an die Spülleitung 8 angeschlossen wird.

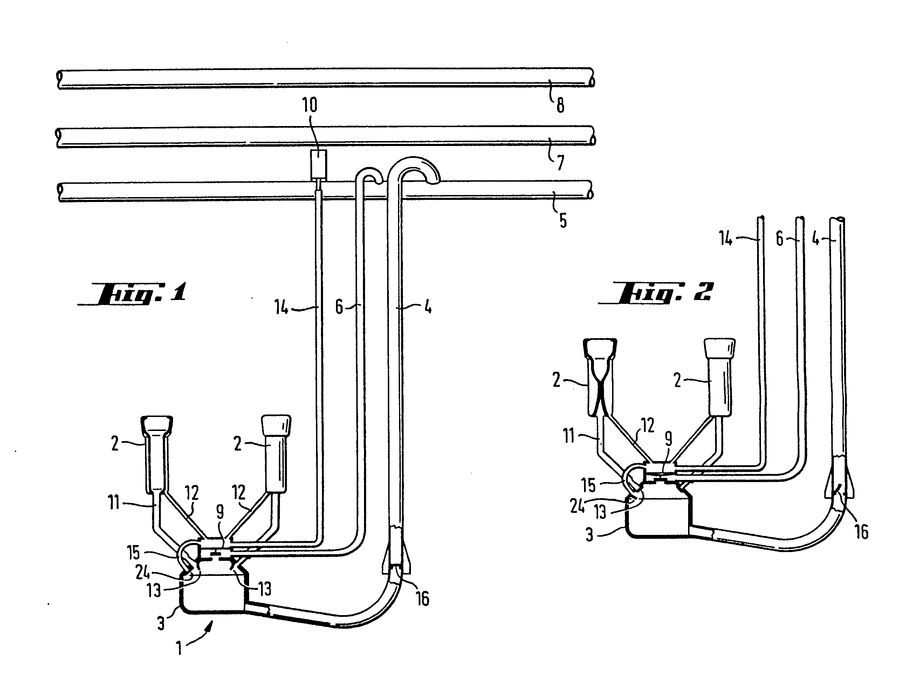

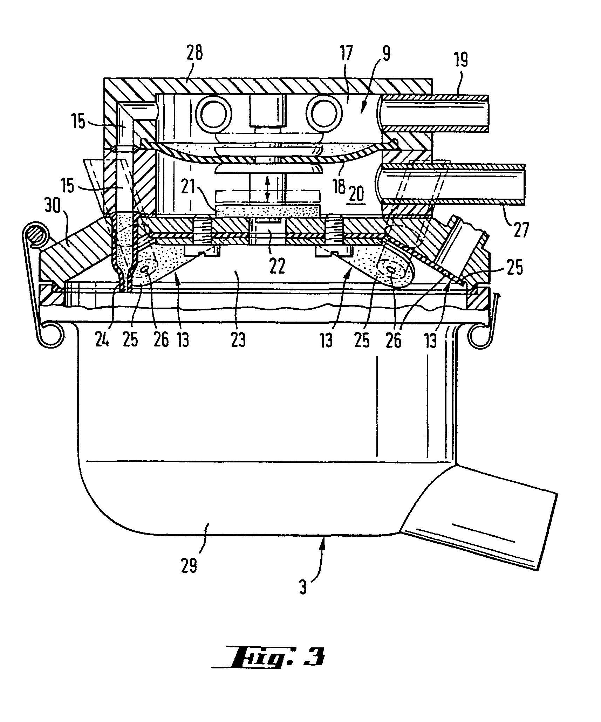

In der Fig. 3 ist ein Ausführungsbeispiel der Erfindung teilweise im Schnitt in der Entlastungsphase dargestellt.

Während der Entlastungsphase wird vom Melkpulsator 10 ein nachfolgend als zweiter Innenraum 17 bezeichneter Raum über der Membrane 18 durch den Anschlußstutzen 19 und durch den langen Pulsschlauch 14 mit atmosphärischer Luft beaufschlagt.

Da der Raum 20 unterhalb der Membrane 18 über den Verbindungsschlauch 6 mit dem Vakuum der Milchtransportleitung 5, der Luftleitung 7 oder der Spülleitung 8 verbunden ist, biegt sich die Membrane 18 nach unten durch und verschließt über den Ventilschließer 21 die Ventilbohrung 22. Der erste Innenraum 23 des Sammelstücks 3 steht deshalb nicht mehr mit dem Vakuum des Raumes 20 in Verbindung. Gleichzeitig strömt über die Verbindungsleitung 15 aus dem zweiten Innenraum 17 atmosphärische Luft über das Lippenventil 24 in den ersten Innenraum 23 des Sammelstücks 3. Über den langen Milchschlauch 4 kann die Milch deshalb ohne Schwierigkeiten aus dem ersten Innenraum 23 in die Milchtransportleitung 5 gesaugt werden. Die Rückschlagventile 13 sind in der Entlastungsphase geschlossen, so daß in den kurzen Milchschläuchen 11 ein Haftvakuum bestehen bleibt.

Die Rückschlagventile 13 können z.B. als Plattenventile 25 ausgebildet sein. In den Plattenventilen 25 können Verbindungsbohrungen 26 mit relativ kleinem Querschnitt angeordnet sein. Der Querschnitt dieser Verbindungsbohrungen 26 muß so klein sein, daß das Haftvakuum in den kurzen Milchschläuchen 11 in den Entlastungssphasen nicht vollständig abgebaut wird. Nach Milchflußende kann sich dagegen das Haftvakuum vollständig in den kurzen Milchschläuchen 11 abbauen, weil der erste Innenraum 23 des Sammelstücks 3 nicht mehr mit Vakuum beaufschlagt wird.

In der Entlastungsphase wird somit atmosphärische Außenluft aus dem zweiten Innenraum 17, den Pulsschlauch 14 und den Melkpulsator 10 in den ersten Innenraum 23 des Sammelstücks 3 eingelassen, so daß die ermolkene Milch zügig über die geöffnete Rückschlagklappe 16 in die Milchtransportleitung 5 abgesaugt werden kann.

In der Saugphase sind die Räume 17 und 20 über den langen Pulsschlauch 14 und den Verbindungsschlauch 6 mit dem Melkvakuum verbunden. Die Membrane 18 befindet sich deshalb in der entlasteten Stellung und der Ventilschließer 21 kann die Ventilbohrung 22 nicht verschließen. Der erste Innenraum 23 des Sammelstücks 3 kann deshalb mit dem Vakuum des Raumes 20 verbunden werden. Da der Raum 20 über den Anschlußstutzen 27 und dem Verbindungsschlauch 6 mit der Milchtransportleitung 5, der Luftleitung 7 oder der Spülleitung 8 verbunden ist, kann das Vakuum nicht durch die in dem langen Milchschlauch 4 befindliche Milch beeinträchtigt werden. Das Lippenventil 24 ist während der Saugphase geschlossen, so daß keine Milch in den zweiten Innenraum 17 gesaugt werden kann. In der Saugphase sind die Plattenventile 25 geöffnet, während die Rückschlagklappe 16 geschlossen ist.

Mit der erfindungsgemäßen Melkvorrichtung werden Vakuumschwankungen sicher vermeiden. Es kann deshalb mit einem relativ niedrigen Vakuum sehr schonend gemolken werden. Unterschiedliche hohe Minutengemelke beeinflussen das in den Zitzenbechern wirkende Melk-Vakuum nicht mehr. Es bleibt in allen Fällen konstant.

Durch die in dem Sammelstück 3 angeordneten Rückschlagventile 13 wird ein Zurückspritzen der Milch gegen die Zitzenspitzen (Rückspray) in den Entlastungsphasen sicher vermieden. Außerdem wird trotz Einströmen von atmosphärischer Luft in das Sammelstück 3 ein sicheres Haftvakuum in den Zitzenbechern 2 erreicht.

Das Vakuum an der Zitze stimmt mit dem Nennvakuum der Melkanlage überein.

Ein weiterer Vorteil dieses Melksystems ist, daß nur noch mit einer einzigen Vakuumhöhe gearbeitet werden muß und daß auch Steigungen der Milchtransportleitungen 5 keinen negativen Einfluß mehr auf das effektive Melkvakuum im Sammelstück 3 mehr haben.

## Patentansprüche

1. Melkvorrichtung mit einem aus Zitzenbechern (2) und einem Sammelstück (3) bestehenden Melkzeug, das über einen langen Milchschlauch (4) mit einer hochverlegten mit dem Melkvakuum beaufschlagten Milchtransportleitung (5) verbunden ist, wobei das Sammelstück (3) in einen mit den kurzen Milchschläuchen (11) der Zitzenbecher (2) verbundenen ersten Innenraum (23) und in einen mit den kurzen Pulsschläuchen (12) der Zitzenbecher (2) verbundenen zweiten Innenraum (17) unterteilt ist, wobei der erste Innenraum (23) durch ein Zweiwegeventil (9) über eine Verbindungsleitung (15) mit atmosphärischer Außenluft als Transportluft für die ermolkene Milch beaufschlagt wird, und wobei das Zweiwegeventil (9) ferner einen mit konstantem Vakuum beaufschlagten Raum (20) mit dem ersten Innenraum (23) des Sammelstücks (3) im Rhythmus der von einem Pulsator (10) gesteuerten Saug- und Entlasungsphasen verbindet oder trennt, wozu ein Vakuum oder Außenluft führender langer Pulsschlauch (14) des Melkpulsators (10) an den zweiten Innenraum (17) des Sammelstücks (3) angeschlossen ist, dadurch gekennzeichnet, daß für den Melkvorgang mit einem vorgegebenen Vakuum im Niedrigvakuumbereich gearbeitet wird, mit welchem die Milchtransportleitung (5), eine Luftleitung (7) und eine gegebenenfalls vorhandene Spülleitung (8) beaufschlagt ist, daß der mit dem konstanten Vakuum beaufschlagbare Raum (20) des Sammelstücks (3) über eine separate Verbindungsleitung (6) unmittelbar und der mit dem Vakuum bzw. der Außenluft über den langen Pulsschlauch (14) des Melkpulsators (10) beaufschlagbare zweite Innenraum (17) für die Zitzenbecher-Pulsschläuche (12) unter Zwischenschaltung des Melkpulsators (10) mit der Milchtransport-, Luft- oder Spülleitung (5, 7, 8) jeweils wahlweise verbindbar ist, daß die an den ersten Innenraum (23) des Sammelstücks (3) für die kurzen Milchschläuche (11) geführte Verbindungsleitung (15) für die atmosphärische Außenluft mit dem zweiten Innenraum (17) oder mit dem langen Pulsschlauch (14) verbunden ist, daß die Zitzenbecher (2) und der erste Innenraum (23) des Sammelstücks (3) über Rückschlagventile (13) verbunden sind, die in den Entlastungsphasen den Innenraum (23) von den Zitzenbechern (2) trennen.

2. Melkvorrichtung nach Anspruch 1, dadurch gekennzeichnet, daß die Verbindungsleitung (15) über ein Klappen- oder Lippenventil (24) in den ersten Innenraum (23) des Sammelstücks (3) einmündet und daß dieser Innenraum (23) über die Verbindungsleitung (15) und über das Klappen- oder Lippenventil (24) in der Entlastungsphase mit atmosphärischer Luft beaufschlagt wird.

3. Melkvorrichtung nach Anspruch 1, dadurch gekennzeichnet, daß die Rückschlagventile (13) im ersten Innenraum (23) des Sammelstücks (3) als Plattenventile (25) ausgebildet sind.

4. Melkvorrichtung nach Anspruch 3, dadurch gekennzeichnet, daß in den Plattenventilen (25) Verbindungsbohrungen (26) mit relativ kleinem Querschnitt angeordnet sind.

5. Melkvorrichtung nach einem oder mehreren der Ansprüche 1 bis 4, dadurch gekennzeichnet, daß im langen Milchschlauch (4) eine Rückschlagklappe (16) angeordnet ist, die ein Zurückfließen der Milch in den ersten Innenraum (23) des Sammelstücks (3) in der Saugphase beim Melken verhindert.

6. Melkvorrichtung nach einem oder mehreren der Ansprüche 1 bis 5, dadurch gekennzeichnet, daß das Zweiwegeventil (9) als Zweiwege-Membranventil ausgebildet ist und daß die Membrane (18) des Zweiwege-Membranventils (9) zwischen dem Pulsverteiler (28) und dem Deckel (30) des Sammelstücks (3) angeordnet ist, daß die Membrane (18) mit einem Ventilschließer (21) verbunden ist und daß die Membrane (18) mit dem Ventilschließer (21) und eine im Sammelstück angeordnete Ventilbohrung (22) das Zweiwege-Membranventil (9) bilden.

## Revendications

1. Machine à traire avec un dispositif de traite constitué de gobelets trayeurs (2) et d'un élément collecteur (3) qui est relié par un long flexible de lait (4) à une conduite de transport de lait (5) posée en hauteur et sollicitée par le vide de traite, l'élément collecteur (3) étant divisé en une première chambre intérieure (23) reliée aux courts flexibles de lait (11) des gobelets trayeurs (2) et une deuxième chambre intérieure (17) reliée aux courts flexibles de pulsation (12) des gobelets trayeurs (2), la première chambre intérieure (23) étant sollicitée, par une soupape à deux voies (9) et par l'intermédiaire d'une conduite de liaison (15), par l'air atmosphérique extérieur servant d'air de transport du lait trait, et la soupape à deux voies (9) reliant ou isolant en outre une chambre (20), sollicitée par du vide constant, à la première chambre intérieure (23) de l'élément collecteur (3) au rythme des phases de succion et de détente commandées par un pulsateur (10), un long flexible de pulsation (14) du pulsateur de traite (10), transportant du vide ou de l'air extérieur, étant pour cela raccordé à la deuxième chambre intérieure (17) de l'élément collecteur (3), caractérisé en ce qu'on travaille pour la traite avec un vide prédéterminé dans la plage des vides faibles, avec lequel sont sollicitées la conduite de transport de lait (5), une conduite d'air (7) et une éventuelle conduite de rinçage (8), en ce que la chambre (20) de l'élément collecteur (3), qui peut être sollicitée par le vide constant, et la deuxième chambre intérieure (17) destinée aux flexibles de pulsation (12) des gobelets trayeurs, qui peut être sollicitée par le vide ou l'air extérieur par l'intermédiaire du long flexible de pulsation (14) du pulsateur de traite (10), peuvent être sélectivement reliées, respectivement directement par un flexible de liaison (6) particulier et avec intercalation du pulsateur de traite (10), à la conduite de transport de lait, d'air ou de rinçage (5, 7, 8), en ce que la conduite de liaison (15) pour l'air atmosphérique extérieur, qui est amenée à la première chambre intérieure (23) de l'élément collecteur (3) destinée aux courts flexibles de lait (11), est reliée à la deuxième chambre intérieure (17) ou au long flexible de pulsation (14), en ce que les gobelets trayeurs (2) et la première chambre intérieure (23) de l'élément collecteur (3) sont reliés par l'intermédiaire de soupapes antiretour (13) qui isolent la chambre intérieure (23) des gobelets trayeurs (2) pendant les phases de détente.

2. Machine à traire selon la revendication 1, caractérisée en ce que la conduite de liaison (15) débouche par l'intermédiaire d'une soupape à clapet ou à bec (24) dans la première chambre intérieure (23) de l'élément collecteur (3), et en ce que cette chambre intérieure (23) est, dans la phase de détente, sollicitée par l'air atmosphérique par l'intermédiaire de la conduite de liaison (15) et de la soupape (24).

3. Machine à traire selon la revendication 1, caractérisée en ce que les soupapes antiretour (13) dans la première chambre intérieure (23) de l'élément collecteur (3) sont réalisés sous forme de distributeurs à tiroirs plats (25).

4. Machine à traire selon la revendication 3, caractérisée en ce que des alésages de liaison (26) de section relativement faible sont disposés dans les distributeurs à tiroirs plats (25).

5. Machine à traire selon une ou plusieurs des revendications 1 à 4, caractérisée en ce qu'un clapet antiretour (16) est disposé dans le long flexible de lait (4), qui empêche un reflux du lait dans la première chambre intérieure (23) de l'élément collecteur (3) dans la phase de succion de la traite.

6. Machine à traire selon une ou plusieurs des revendications 1 à 5, caractérisée en ce que la soupape à deux voies (9) est réalisée sous la forme d'une soupape à deux voies à diaphragme et en ce que la diaphragme (18) de la soupape à deux voies (9) est disposée entre le distributeur de pulsation (28) et le couvercle (30) de l'élément collecteur (3), en ce que le diaphragme (18) est fermé par un obturateur de soupape (21) et en ce que le diaphragme (18) constitue la soupape à deux voies à diaphragme (9) avec l'obturateur (21) et un perçage de soupape (22) disposé dans l'élément collecteur.

**Claims**

1. Milking device having a milking arrangement, which comprises teat cups (2) and a collector (3) and is connected to a highly disposed milk conveyor pipe (5), which has the milking vacuum acting thereon, via a long milk hose (4), the collector (3) being divided into a first interior (23), which is connected to the short milk hoses (11) of the teat cups (2), and into a second interior (17), which is connected to the short pulse hoses (12) of the teat cups (2), the first interior (23) having a two-way acting valve (9) acting thereon via a connection pipe (15) with atmospheric outside air as the conveyor air for the milked milk, and the two-way acting valve (9) also connecting or separating a chamber (20), which has constant vacuum acting thereon, to or from the first interior (23) of the collector (3) in synchronism with the suction and discharge phases controlled by a pulsator (10), for which purpose a long pulse hose (14) of the milking pulsator (10), which hose conducts vacuum or outside air, communicates with the second interior (17) of the collector (3), characterised in that, for a milking operation using a prescribed vacuum, the operation is effected in the low vacuum range, which vacuum acts on the milk conveyor pipe (5), an air pipe (7) and a rinsing pipe (8), which may possibly be provided, in that the chamber (20) of the collector (3), which is capable of having the constant vacuum acting thereon, is directly connectable to the milk conveyor pipe, the air pipe or the rinsing pipe (5, 7, 8) via a separate connection pipe (6), and the second interior (17) for the teat cup pulse hoses (12) is selectively connectable thereto with the interposition of the milking pulsator (10), in that the connection pipe (15) for the atmospheric outside air, which extends to the first interior (23) of the collector (3) for the short milk hoses (11), is connected to the second interior (17) or to the long pulse hose (14), and in that the teat cups (2) and the first interior (23) of the collector (3) are connected via non-return valves (13), which separate the interior (23) from the teat cups (2) in the discharge phases.

2. Milking device according to claim 1, characterised in that the connection pipe (15) extends into the first interior (23) of the collector (3) via a flap or lip valve (24), and in that this interior (23) has atmospheric air acting thereon via the connection pipe (15) and via the flap or lip valve (24) in the discharge phase.

3. Milking device according to claim 1, characterised in that the non-return valves (13) in the first interior (23) of the collector (3) are provided as plate valves (25).

4. Milking device according to claim 3, characterised in that connecting bores (26), having a relatively small cross-section, are provided in the plate valves (25).

5. Milking device according to one or more of claims 1 to 4, characterised in that a non-return flap (16) is disposed in the long milk hose (4) and prevents the milk from flowing back into the first interior (23) of the collector (3) in the suction phase during the milking operation.

6. Milking device according to one or more of claims 1 to 5, characterised in that the two-way acting valve (9) is a two-way acting diaphragm valve, and in that the diaphragm (18) of the two-way diaphragm valve (9) is disposed between the pulse distributor (28) and the cover (30) of the collector (3), in that the diaphragm (18) is connected to a valve closing means (21), and in that the diaphragm (18), together with the valve closing means (21) and a valve bore (22), which is provided in the collector, form the two-way acting diaphragm valve (9).

Fig. 2

Fig. 1

**Fig. 3**